# FASCICULE DE BREVET EUROPEEN

(11) **EP 1 050 259 B1**
(45) Date de publication et mention de la délivrance du brevet: **10.12.2003**
(21) Numéro de dépôt: 00420091.1
(22) Date de dépôt: 03.05.2000
(51) Int. Cl.: A47J 31/40, A47J 31/36

(54) **Machine à café du type expresso comportant des moyens hydrauliques pour comprimer la mouture**
Maschine zum Bereiten von Espressokaffee mit hydraulischer Vorrichtung zum Verdichten des Kaffeemehls
Machine for making espresso coffee having hydraulic means to compress the coffee powder

(30) Priorité: 04.05.1999 FR 9905810
(43) Date de publication de la demande: 08.11.2000
(73) Titulaire: SEB S.A., 69130 Ecully (FR)
(72) Inventeur: Pessin, Olivier, 69340 Francheville (FR); Ligneau, Vincent, 69780 Mions (FR)
(74) Mandataire: Kiehl, Hubert

(56) Documents cités:
- EP-A- 0 321 773
- EP-A- 0 545 758
- FR-A- 1 373 832

## Description

La présente invention est relative au domaine des machines à café du type expresso ou à des appareils à préparer le café dans lesquels l'eau chaude passe sous pression à travers le filtre contenant la mouture.

Une telle machine comporte une chaudière pour chauffer l'eau sous pression fournie par une pompe et destinée à être injectée dans la mouture de café contenue par le porte-filtre. Avant d'envoyer l'eau chaude sous pression à travers la mouture, celle-ci doit être tassée correctement.

Un tassage optimal de la mouture assure une bonne extraction des arômes, ce qui caractérise d'ailleurs un café du type expresso, ainsi que le compactage du marc de café sous la forme d'une galette sèche, facile à extraire du porte-filtre à la fin du cycle de confection du café.

Par contre, un tassage insuffisant de la mouture ne permettant pas d'extraire suffisamment d'arômes, influence le goût du café obtenu et rend, par ailleurs, le marc très humide, ce dernier ne pouvant pas se constituer en une galette dense, facilement éjectable.

De la même manière, un tassage trop important détermine une perte de charge trop importante dans la mouture, l'eau passe trop lentement à travers le filtre entraînant une dégradation du goût du café, ainsi qu'un temps d'extraction du café trop long.

La valeur optimale de la force de tassage dépend essentiellement de la quantité de mouture de café présente dans le porte-filtre. Cette valeur est plus importante dans le cas de la confection d'une tasse de café, ou pour une dose de mouture dans le porte-filtre que dans le cas de la confection de deux tasses, ou pour l'équivalent de deux doses de mouture.

Le tassage de la mouture est obtenu par le déplacement du piston à l'intérieur du porte-filtre contenant la mouture de café.

On connaît, d'après le document EP 0 321 773, une machine a café du type expresso comportant des moyens pour modifier la position axiale du piston injecteur par rapport à un levier d'actionnement entre une première et une deuxième position afin de distribuer une première et une deuxième quantité de boisson. Cependant, le déplacement axial du piston s'effectue, après une sélection manuelle, à l'aide des moyens mécaniques, tels un moteur et un jeu d'engrenages entraînant la tige du piston en son mouvement de translation. Ce mécanisme est compliqué, peu performant et onéreux.

Pour améliorer le tassage de la mouture, on a envisagé l'emploi de moyens hydrauliques. La présente invention se pose le problème d'un tassage optimal de la mouture dans le cadre d'une machine présentant un tassage hydraulique de la mouture.

Une machine à café du type expresso à tassage hydraulique est connue du document EP 0 545 758 au nom de la demanderesse. Cette machine comporte un nez ou piston injecteur actionné pour se déplacer et pénétrer à l'intérieur du porte-filtre fixe contenant la mouture. Le nez est porté par une première partie d'un vérin hydraulique commandé par l'eau fournie par la pompe de telle sorte à coulisser par rapport au châssis de la machine. La seconde partie du vérin se déplace par rapport au châssis de la machine, des moyens d'arrêt étant prévus pour limiter la force de compression de la mouture par le nez. Les moyens d'arrêt comprennent notamment un second vérin hydraulique d'isolement qui coupe l'alimentation en eau du premier vérin à une pression unique prédéterminée, la force de compression de la mouture étant proportionnelle à la pression de l'eau enfermée dans la chambre du vérin.

L'inconvénient de cette solution consiste en ce que la pression de coupure est un compromis entre la pression de tassage d'une dose de mouture et celle de tassage de deux doses de mouture. Par conséquent, dans le cadre de la confection d'une seule tasse de café, la force de tassage se trouve insuffisante et la galette de marc ne peut pas se former, alors que dans le cas de deux tasses, la force de compression est trop importante, déterminant ainsi un temps de passage trop long de l'eau dans la mouture.

Le but de l'invention est de remédier aux inconvénients précités d'un tassage hydraulique et de présenter des moyens aptes à limiter la pression de fermeture de l'alimentation du vérin et donc de la force exercée sur la mouture en fonction de la quantité du café présente dans le porte-filtre.

Un autre but de l'invention est d'adapter de manière automatique la force de compression de la mouture en fonction de la quantité de mouture contenue dans le porte-filtre.

Un but supplémentaire de l'invention est de fournir des moyens limitant la force de compression de la mouture à la quantité de cette dernière qui soient simples, peu encombrants, peu coûteux et fiables en fonctionnement.

Ces buts sont réalisés dans une machine à café du type expresso comportant un réservoir, une pompe pour envoyer l'eau sous pression chauffée par une chaudière à travers un piston injecteur dans la mouture contenue dans un porte-filtre et des moyens pour comprimer la mouture avant l'injection de l'eau chaude sous pression, lesdits moyens comprenant un vérin hydraulique recevant par un circuit hydraulique l'eau de la pompe pour déplacer le piston injecteur contre la mouture, un dispositif limiteur de pression étant prévu entre la pompe et le vérin pour couper l'alimentation du vérin hydraulique à une valeur prédéterminée de la pression dans le circuit, caractérisée en ce que le dispositif limiteur de pression comporte des moyens de réglage de sa pression de fermeture et en ce que lesdits moyens de réglage sont actionnés par le piston injecteur en déplacement contre la mouture sous l'action de l'eau envoyée par la pompe.

Ainsi, le réglage de la force de tassage de la mouture se fait de manière automatique en fonction de la quantité de mouture effectivement présente dans le porte-filtre, avec des moyens simples, par une sorte de rétroaction à partir du déplacement du piston injecteur en contact avec la mouture sur un moyen de réglage d'un limiteur de pression, le piston injecteur étant actionné par un vérin hydraulique sous l'action de l'eau envoyée par la pompe.

On aurait pu envisager de prévoir des moyens pour limiter la pression de tassage en fonction de la quantité de mouture de café dans le porte-filtre, ces moyens étant notamment constitués par des pistons étagés et des cylindres de tassage de diamètres différents correspondants dans lesquels coulissent lesdits pistons poussés par l'eau envoyée par la pompe. Chaque cylindre présente un jeu de lumières permettant d'alimenter chaque cylindre en fonction de la hauteur du piston, hauteur qui dépend de la quantité de mouture présente dans le porte-filtre. Ainsi, le piston en position extrême haute ne permet que l'alimentation du cylindre de plus petit diamètre, pendant que le piston en position extrême basse ne permet que l'alimentation du cylindre le plus gros en diamètre, le nombre de cylindres étant au minimum de deux.

L'inconvénient de cette solution consiste en ce qu'elle nécessite de nombreuses étanchéités qui s'avèrent difficiles à réaliser, pour un caractère discret des pressions obtenues.

De préférence, le dispositif limiteur de pression de la machine à café selon l'invention comporte un premier cylindre relié par un conduit à la pompe, ce premier cylindre étant prolongé par un deuxième cylindre coaxial de diamètre plus petit relié par un conduit au vérin hydraulique, un piston étagé tubulaire prolongé d'un clapet et coulissant à l'intérieur des deux cylindres, contre la force d'un ressort de limiteur, entre deux positions, une première, dite de fermeture, dans laquelle le clapet vient fermer contre un siège et une seconde, dite d'ouverture, dans laquelle le clapet est hors de son siège, le ressort étant au repos.

Le dispositif limitant la pression exercée sur la mouture étant également un vérin hydraulique, il est actionné par l'eau sous pression venant de la pompe. Il n'y a donc pas de moyen d'actionnement supplémentaire pour ce limiteur.

On aurait pu envisager de prévoir un moyen modifiant le rapport des diamètres du piston. Par exemple, on aurait pu agencer une bague en ferrite à l'intérieur du piston tubulaire étagé ainsi qu'un aimant déplaçable verticalement à l'extérieur du cylindre, le déplacement de la bague pouvant ainsi varier la valeur de la pression de fermeture du limiteur.

Avantageusement, dans la machine à café selon l'invention, le ressort de limiteur est coaxial à l'extérieur du deuxième cylindre et les moyens de réglage de la pression comportent une fourchette animée par le piston tasseur et prenant appui sur l'extrémité du ressort de limiteur opposée à celle portant sur le piston étagé.

On obtient ainsi un réglage efficace et fiable de la pression de fermeture du limiteur et donc de la force de tassage de la mouture en utilisant des moyens mécaniques très simples et en rajoutant une seule pièce, la fourchette, à la construction initiale.

Selon une variante avantageuse de l'invention, la fourchette est continuellement entraînée par le piston en son déplacement par rapport au ressort de limiteur, la fourchette pouvant occuper toute position intermédiaire comprise entre deux positions de butée.

La fourchette entraînée par le piston peut donc occuper toute position intermédiaire à partir de deux positions données, ce qui adapte exactement la force de tassage de la mouture à toute quantité de café présente dans le porte-filtre.

Selon une variante de l'invention, la fourchette est susceptible d'être entraînée manuellement en son déplacement par rapport au ressort de limiteur au moins sur une partie de sa course, la fourchette étant entraînée par le piston sur le restant de sa course.

Ainsi, l'utilisateur peut bénéficier de deux types de réglage, un manuel et un autre automatique, en combinaison. Ce mode de réalisation utilisant une plage de réglage manuel et une autre de réglage automatique augmente les valeurs de la force de tassage et permet de varier d'autres paramètres, notamment le goût ou la force du café.

De préférence, le limiteur de pression est agencé parallèlement à côté du piston injecteur et la fourchette présente une section transversale en forme de Z.

Ceci donne une construction compacte et permet de transmettre un simple mouvement de translation d'un premier organe à un deuxième qui se déplace parallèlement à celui-ci.

Avantageusement, la fourchette est réalisée en une matière plastique. Ainsi, elle peut être réalisée facilement par toute technique de moulage, ce qui permet une fabrication en grande série et un coût de fabrication réduit.

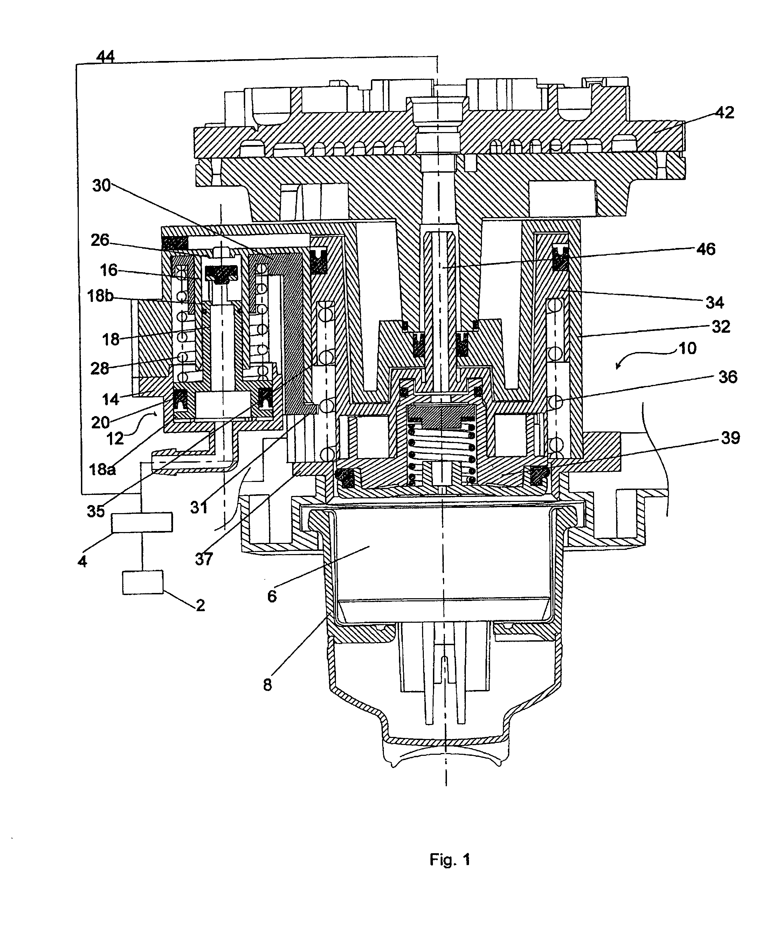

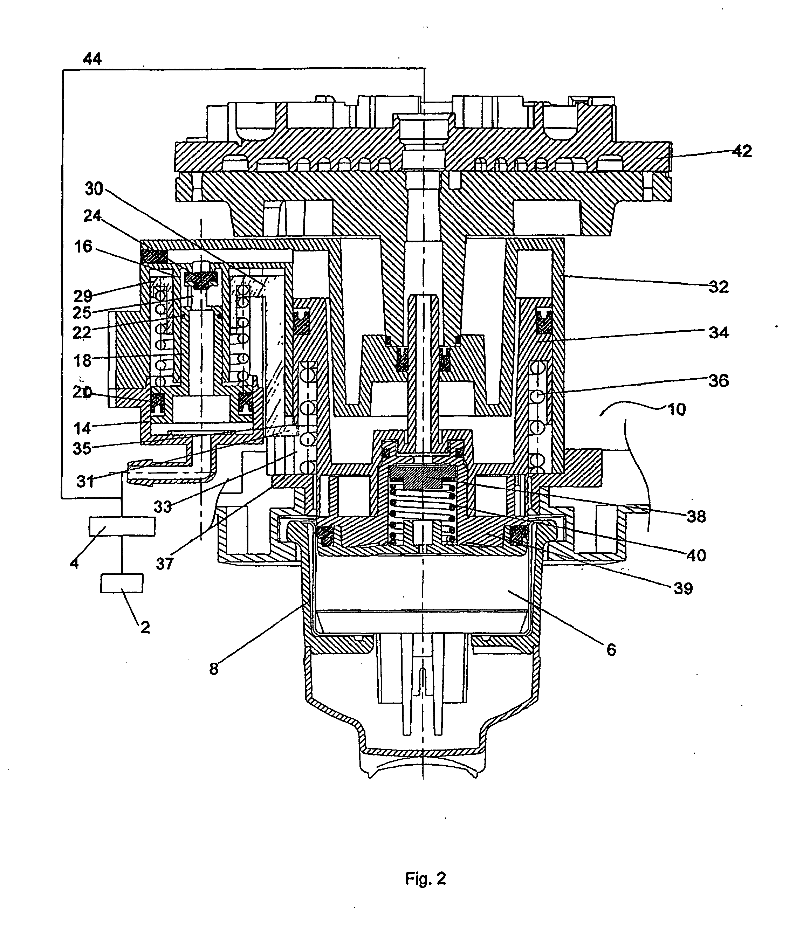

D'autres caractéristiques et avantages de l'invention apparaîtront plus clairement à la lumière de la description et des dessins qui suivent, illustrant, à titre d'exemples non limitatifs, des modes de mise en oeuvre de l'invention. Ainsi, référence est faite aux figures 1 et 2, où :
- la figure 1 est une vue en coupe de la machine à café illustrant ses différents organes avant le tassage de la mouture, le vérin hydraulique étant dans sa position rétractée ;
- la figure 2 est une vue similaire, mais illustrant les mêmes organes en position de tassage de la mouture, le vérin hydraulique étant en position complètement déployée.

Dans les figures 1 et 2, la machine à café du type expresso comporte un porte-filtre 8 contenant la mouture 6 placé sur un support fixe sous le piston 34 solidaire de la chaudière 42.

La machine à café comporte un réservoir d'eau 2 et une pompe 4 destinée à envoyer l'eau du réservoir 2 via un conduit 44 dans la chaudière 42, de la manière décrite dans le document EP 0 545 758 au nom de la demanderesse. L'eau chauffée sous pression est ensuite envoyée via le piston injecteur 39 à travers la mouture 6 d'où elle s'écoule sous forme d'infusion vers la tasse de café.

Le piston injecteur 39 est monté de manière coulissante par rapport au châssis de la machine par l'intermédiaire d'un piston 34 de vérin hydraulique de tassage 10 actionné par l'eau fournie par la pompe 4. Le piston de vérin ou tasseur 34 peut être déplacé contre l'action d'un ressort antagoniste 36 monté entre le piston 34 et le cylindre 32, monté fixe, du vérin hydraulique de tassage 10. Le cylindre extérieur 32 du vérin hydraulique de tassage 10 est monté sur le châssis de la machine par l'intermédiaire d'une coiffe 37.

Conformément à l'invention, un dispositif limiteur de pression 12 est agencé entre la pompe 4 et le vérin hydraulique de tassage 10.

Selon une variante avantageuse de l'invention, le dispositif limiteur de pression 12 est monté latéralement par rapport au cylindre 32 du vérin de tassage 10 de telle manière que l'axe du piston 18 du limiteur soit parallèle à l'axe du piston 34 du vérin de tassage hydraulique 10.

Selon une autre variante non représentée aux dessins, le dispositif limiteur de pression 12 est monté au-dessus du vérin de tassage hydraulique 10, de manière que l'axe du piston 18 du limiteur soit dans le prolongement de l'axe du piston 34 du vérin hydraulique 10.

Le dispositif limiteur de pression 12 est constitué de deux cylindres coaxiaux 14 et 16 de diamètres différents. Le cylindre de diamètre le plus grand 14 est placé en amont du côté de la pompe 4 et il reçoit l'eau envoyée par celle-ci. Le cylindre de diamètre plus faible 16 est agencé en aval du côté du vérin hydraulique 10 et assure une liaison hydraulique avec ce dernier.

A l'intérieur du limiteur 12, entre les cylindres 14 et 16, coaxial à ces derniers est agencé de manière coulissante un piston étagé tubulaire 18, c'est à dire présentant un canal central de passage. Le piston 18 présente deux parties 18a et 18b de sections différentes prévues pour coulisser à l'intérieur des cylindres 14,16, La partie 18a de diamètre plus grand coulisse dans le cylindre 14, un joint d'étanchéité radiale 20 assurant l'étanchéité entre la partie 18a du piston 18 et le cylindre 14. De la même manière, la partie 18b de diamètre plus réduit coulisse dans le cylindre 16, un joint d'étanchéité radiale 22 assurant l'étanchéité entre la partie 18b du piston 18 et le cylindre 16.

Tel qu'illustré à la figure 1, le piston 18 est maintenu dans sa position basse ou d'ouverture par un ressort antagoniste 28. Dans cette position, le piston prend appui sur la partie frontale ou inférieure du cylindre 14 et il permet la circulation de l'eau entre la pompe 4 et le vérin hydraulique 10.

Un joint d'étanchéité axiale 24 constituant un clapet d'obturation est fixé sur la partie frontale de la partie de diamètre réduit 18b du piston de manière à présenter des passages 25 pour l'eau provenant de l'intérieur du piston 18 vers le cylindre 16.

Le cylindre 16 présente une portée ou lamage 26 sur sa surface frontale ou supérieure faisant face au vérin 12. La portée 26 sert de siège d'appui pour le joint d'étanchéité axiale 24 lorsqu'il est appliqué par le piston 18 pour fermer le circuit hydraulique reliant la pompe 4 du vérin 12.

Le ressort 28 prend appui d'un côté sur le piston 18 et de l'autre côté sur une fourchette 30.

Tel que visible aux figures 1 et 2, la fourchette 30 est prévue d'un côté pour entraîner le ressort de limiteur 28 et de l'autre côté elle présente un doigt 31 pouvant se déplacer en translation dans une fente 33 du cylindre 32 du vérin hydraulique 10.

Dans son déplacement par rapport au ressort de limiteur 28, la fourchette 30 peut occuper toute position intermédiaire comprise entre deux positions de butée, une première quand la fourchette 30 prend appui, par son propre poids poussée par le ressort de limiteur 28, sur son appui ménagé à l'extrémité du cylindre 16, sur le ressort 28, le piston injecteur 39 étant dans sa position haute, loin de la mouture, et une deuxième position de butée quand la fourchette 30 vient en contact avec la coiffe 37, entraînée par le piston injecteur 39 en contact avec la mouture.

La figure 1 montre la fourchette 30 en position de repos quand elle est maintenue en position haute par le ressort de limiteur 28.

La figure 2 montre la fourchette 30 en position basse entraînée par le piston 34.

La fourchette 30 est donc montée mobile en translation dans la fente 33 du cylindre 32 et elle est prévue pour agir sur le ressort 28 et modifier la valeur de sa force de compression.

De préférence, la fourchette 30 présente une section transversale en forme de Z, ayant deux bras parallèles : supérieur 29 et inférieur 31. Le bras supérieur 29 étant en contact avec la partie supérieure du ressort 28, et le bras inférieur ou doigt 31 étant en contact avec l'extrémité 35 du piston 34.

Dans une variante de réalisation de l'invention où le dispositif limiteur de pression 12 est monté au-dessus et dans le prolongement du vérin de tassage hydraulique 10, la fourchette 30 est, par exemple, en forme de C.

Avantageusement, la fourchette 30 peut être réalisée de manière économique en une matière plastique par un procédé de moulage.

En fonctionnement, la situation de départ est représentée à la figure 1, quand le porte-filtre 8 est sur son support, il est rempli d'une certaine quantité de mouture de café 6 correspondant au nombre de tasses de café que l'on désire obtenir suite à l' utilisation de la machine.

Le vérin hydraulique 10 est dans sa position haute sous l'action du ressort 36. Le piston 18 du limiteur de pression 12 est maintenu en position basse par le ressort 28, le circuit à l'intérieur du limiteur 12 étant ainsi ouvert. La chaudière 42 contient de l'eau chaude restant du cycle précédent. La pompe 4 est à l'arrêt. Le clapet taré 38 est fermé par le ressort 40. Le piston 34 se trouve au-dessus du porte-filtre 8.

L'utilisateur met en route la machine en mettant en route en même temps la pompe 4. La pompe 4, une fois démarrée, remplit d'eau le vérin de tassage hydraulique 10. Le piston 34 du vérin descend par coulissement au long du cylindre 32 et vient en contact avec la mouture 6 contenue dans le porte-filtre 8.

Le coulissement du piston 34 est sensiblement arrêté par la force opposée par la mouture 6. La pompe 4 continuant de fonctionner, la pression dans le circuit d'eau en aval de la pompe, notamment dans le circuit du limiteur de pression 12 augmente. La différence des forces exercées sur le piston 18 du limiteur 12, due à la pression exercée dans les deux cylindres de diamètres différents 14 et 16 est une force équivalente orientée dans le sens opposé à la force exercée par le ressort 28. Le circuit hydraulique à l'intérieur du limiteur 12 reste ouvert quand cette force sur le piston est inférieure ou égale à la force opposée exercée par le ressort 28.

La pression continuant d'augmenter, à partir d'une certaine valeur P0 de celle-ci, la force équivalente sur le piston 18 devient supérieure à l'effort du ressort 28. A ce moment le piston 18 se déplace vers le haut et il vient placer le joint de clapet 24 sur la portée 26 constituant le siège et couper ainsi l'alimentation du vérin hydraulique 10. Cette valeur de la pression de fermeture détermine ainsi la valeur de la force de tassage exercée par le piston 34 sur la mouture 6.

On remarque aussi que la valeur de la pression de fermeture P0 dépend de la compression du ressort 28 du limiteur 12. Cette valeur peut être modifiée en réglant la position de la fourchette 30.

Dans une variante avantageuse de l'invention, la position de la fourchette 30 peut être réglée de manière automatique par le déplacement du piston 34 par rapport au cylindre 32 du vérin 10.

Ainsi, dans le cadre d'une petite quantité de mouture 6 présente dans le porte-filtre 8, par exemple pour l'équivalent d'une tasse de café, le piston 34 du vérin de tassage 10 venant en contact de la mouture 6, appuie avec son extrémité 35 sur le doigt 31 de la fourchette 30. Le piston 34 entraîne donc dans son déplacement vertical le doigt 35 de la fourchette 30 qui coulisse dans la fente 33 du cylindre 32. La fourchette 30 appuie alors sur le ressort 28 du limiteur 12 augmentant ainsi la force de compression de celui-ci et, par conséquent la valeur de fermeture de la pression P0 du limiteur 12.

Dans le cadre d'une quantité plus importante de mouture dans le porte-filtre 8, le piston 34 du vérin hydraulique vient en contact de la mouture 6 sans entraîner la fourchette 30, donc sans changer la valeur initiale de la pression de fermeture du limiteur.

Le circuit du vérin étant fermé et la pompe continuant à fonctionner, l'eau envoyée dans le conduit 44 arrive à la chaudière 42 et d'ici à l'intérieur du piston 34, dans le conduit 46. La pression augmente jusqu'à atteindre la pression de tarage du ressort 40 du clapet taré 38 qui s'ouvre. L'eau sous pression contenue dans la chaudière est poussée par la pompe 4, traverse le clapet 38 et est injectée par la suite dans la mouture 6.

A titre d'exemple, pour une valeur de la pression de fermeture P0 inférieure à 4 bar, on injecte de l'eau dans la mouture à partir d'une pression de 4 bar.

La correction de la valeur de la pression de fermeture du limiteur 12 peut se faire de manière automatique et en continu. Cela implique un entraînement de la fourchette 30 par le piston 34 quelle que soit la quantité de mouture dans le porte-filtre 8.

Selon une variante de réalisation de l'invention, la pression de fermeture peut varier de manière automatique en continu sur une plage de valeurs de la quantité de café et rester constante à partir d'une valeur prédéterminée. Dans ce cas, la fourchette 30 est entraînée par le piston 34 pour certaines quantités, notamment pour des petites doses de café, l'extrémité 35 du piston 34 n'étant plus en contact avec le doigt 31 de la fourchette 30 pour d'autres quantités, ce qui maintient ainsi une valeur constante de la pression de fermeture pour ces dernières.

Selon une autre variante de l'invention, la fourchette 30 peut être actionnée également sur au moins une partie de sa course par des moyens manuels, non représentés aux figures, pour occuper deux positions distinctes ou pour varier sa position en continu entre ces deux positions. Un tel moyen d'actionnement peut être, par exemple, un excentrique commandé par un bouton situé sur le panneau de commande de la machine. Conformément à cette variante, la fourchette est manoeuvrée par l'utilisateur via une commande de sélection de la force de tassage, de la quantité ou de la force du café pour une certaine plage de valeurs, la fourchette étant commandée automatiquement par le déplacement du piston pour d'autres valeurs de la quantité de mouture.

Selon encore une autre variante de l'invention, la fourchette 30 peut être actionnée par des moyens manuels et par le piston 34 sur une partie seulement de sa course, pour d'autres quantités de mouture la pression de fermeture restant constante.

## Revendications

1. Machine à café du type expresso comportant un réservoir (2), une pompe (4) pour envoyer l'eau sous pression chauffée par une chaudière (42) à travers un piston injecteur (39) dans la mouture (6) contenue dans un porte-filtre (8) et des moyens pour comprimer la mouture avant l'injection de l'eau chaude sous pression, lesdits moyens comprenant un vérin hydraulique (10) recevant par un circuit hydraulique l'eau de la pompe (4) pour déplacer le piston injecteur (39) contre la mouture (6), un dispositif limiteur de pression (12) étant prévu entre la pompe (4) et le vérin (10) pour couper l'alimentation du vérin hydraulique (10) à une valeur prédéterminée de la pression (P0) dans le circuit, **caractérisée en ce que** le dispositif limiteur de pression (12) comporte des moyens de réglage (30) de sa pression de fermeture (P0) et **en ce que** lesdits moyens de réglage (30) sont actionnés par le piston injecteur (39) en déplacement contre la mouture (6) sous l'action de l'eau envoyée par la pompe (4).

2. Machine à café selon la revendication 1, **caractérisée en ce que** le dispositif limiteur de pression (12) comporte un premier cylindre (14) relié par un conduit à la pompe (4), ce premier cylindre étant prolongé par un deuxième cylindre (16) coaxial de diamètre plus petit relié par un conduit au vérin hydraulique (10), un piston étagé tubulaire (18) prolongé d'un clapet (24) et coulissant à l'intérieur des deux cylindres (14,16), contre la force d'un ressort de limiteur (28), entre deux positions, une première, dite de fermeture, dans laquelle le clapet (24) vient fermer contre un siège (26) et une seconde, dite d'ouverture, dans laquelle le clapet (24) est hors de son siège, le ressort (28) étant au repos.

3. Machine à café selon la revendication 2, **caractérisée en ce que** le ressort de limiteur (28) est coaxial à l'extérieur du deuxième cylindre (16) et **en ce que** les moyens de réglage (30) de la pression (P0) comportent une fourchette (30) animée par le piston tasseur (34) et prenant appui sur l'extrémité du ressort de limiteur (28) opposée à celle portant sur le piston étagé (18).

4. Machine à café selon la revendication 3, **caractérisée en ce que** la fourchette (30) est continuellement entraînée par le piston (34) en son déplacement par rapport au ressort de limiteur (28), la fourchette (30) pouvant occuper toute position intermédiaire comprise entre deux positions de butée.

5. Machine à café selon la revendication 4, **caractérisée en ce que** la fourchette (30) est susceptible d'être entraînée manuellement en son déplacement par rapport au ressort de limiteur (28) au moins sur une partie de sa course, la fourchette étant entraînée par le piston (34) sur le restant de sa course.

6. Machine à café selon l'une des revendications 3, 4 ou 5, **caractérisée en ce que** le limiteur de pression est agencé parallèlement à côté du piston injecteur et **en ce que** la fourchette (30) présente une section transversale en forme de Z.

7. Machine à café selon l'une des revendications 3, 4, 5 ou 6, **caractérisée en ce que** la fourchette (30) est réalisée en une matière plastique.

## Patentansprüche

1. Kaffeemaschine für Espresso mit einem Tank (2), einer Pumpe (4), um das unter Druck stehende Wasser, das von einem Wasserkessel (42) erhitzt ist, durch einen Einspritzkolben (39) in das Mahlgut (6) zu schicken, das in einem Filterträger (8) enthalten ist, und Mitteln zum Komprimieren des Mahlguts vor dem Einspritzen des unter Druck stehenden Wassers, wobei die Mittel einen Hydraulikzylinder (10) aufweisen, der von einem Hydraulikkreis das Wasser der Pumpe (4) erhält, um den Einspritzkolben (39) gegen das Mahlgut (6) zu verschieben, wobei eine Druckbegrenzereinrichtung (12) zwischen der Pumpe (4) und dem Zylinder (10) vorgesehen ist, um die Versorgung des Hydraulikzylinders (10) bei einem vorbestimmten Wert (P0) des Drucks in dem Kreis zu unterbrechen, **dadurch gekennzeichnet, daß** die Druckbegrenzereinrichtung (12) Regelungsmittel (30) für seinen Verschlußdruck (P0) hat, und daß die Regelungsmittel (30) von dem Einspritzkolben (39) unter der Wirkung des von der Pumpe (4) geschickten Wassers in Verschiebung gegen das Mahlgut (6) betätigt werden.

2. Kaffeemaschine nach Anspruch 1, **dadurch gekennzeichnet, daß** die Druckbegrenzereinrichtung (12) einen ersten Zylinder (14) aufweist, der durch einen Kanal mit der Pumpe (4) verbunden ist, wobei dieser Zylinder durch einen zweiten koaxialen Zylinder (16) mit kleinerem Durchmesser verlängert ist, der durch einen Kanal mit dem Hydraulikzylinder (10) verbunden ist, einen abgestuften rohrförmigen Kolben (18), der mit einem Ventil (24) verlängert ist und im Inneren der beiden Zylinder (14, 16) gegen die Kraft einer Begrenzerfeder (28) zwischen zwei Positionen gleitet, einer ersten, sogenannten Verschlußposition, in welcher das Ventil (24) gegen einen Sitz (26) verschließt, und einer zweiten, sogenannten Öffnungsposition, bei welcher das Ventil (24) außerhalb seines Sitzes ist, wobei die Feder (28) in Ruhe ist.

3. Kaffeemaschine nach Anspruch 2, **dadurch gekennzeichnet, daß** die Begrenzerfeder (28) zum Äußeren des zweiten Zylinders (16) koaxial ist, und daß die Regelungsmittel (30) für den Druck (P0) eine Gabel (30) aufweisen, die von dem Verfestigungskolben (34) bewegt wird und an dem Ende der Begrenzerfeder (28) anliegt, das demjenigen entgegengesetzt ist, das an dem abgestuften Kolben (18) ruht.

4. Kaffeemaschine nach Anspruch 3, **dadurch gekennzeichnet, daß** die Gabel (30) kontinuierlich von dem Kolben (34) in ihrer Verschiebung bezüglich der Begrenzerfeder (28) mitgenommen wird, wobei die Gabel (30) jede Zwischenposition einnehmen kann, die zwischen zwei Anschlagpositionen liegt.

5. Kaffeemaschine nach Anspruch 4, **dadurch gekennzeichnet, daß** die Gabel (30) in ihrer Verschiebung bezüglich der Begrenzerfeder (28) wenigstens über einen Teil ihres Hubs manuell mitgenommen werden kann, wobei die Gabel über den restlichen Hub von dem Kolben (34) mitgenommen wird.

6. Kaffeemaschine nach einem der Ansprüche 3, 4 oder 5, **dadurch gekennzeichnet, daß** der Druckbegrenzer parallel neben dem Einspritzkolben angeordnet ist, und daß die Gabel (30) einen Z-förmigen Querschnitt aufweist.

7. Kaffeemaschine nach einem der Ansprüche 3, 4, 5 oder 6 **dadurch gekennzeichnet, daß** die Gabel (30) aus einem Kunststoff hergestellt ist.

## Claims

1. An expresso type coffee maker comprising a tank (2), a pump (4) for delivering water heated by a boiler (42) under pressure through an injector piston (39) into the grounds (6) contained in a filter carrier (8), and means for compressing the grounds prior to injecting hot water under pressure, said means comprising a hydraulic actuator (10) receiving water from the pump (4) via a hydraulic circuit to displace the injector piston (39) against the grounds (6), a pressure limiter device (12) being provided between the pump (4) and the actuator (10) to interrupt the feed to the hydraulic actuator (10) at a predetermined value of pressure (P0) in the circuit, the coffee maker being **characterized in that** the pressure limiter device (12) includes means (30) for adjusting its closure pressure (P0), and **in that** said adjustment means (30) are actuated by the injector piston (39) in displacement against the grounds (6) under the action of the water delivered by the pump (4).

2. A coffee maker according to claim 1, **characterized in that** the pressure limiter device (12) includes a first cylinder (14) connected by a duct to the pump (4), said first cylinder being extended by a second cylinder (16) on the same axis and of smaller diameter, and connected via a duct to the hydraulic actuator (10), a stepped tubular piston (18) extended by a valve member (24) and sliding inside the two cylinders (14, 16) against the force of a limiting spring (28) between two positions, a "closing" first position in which the valve member (24) is closed against a seat (26), and an "opening" second position in which the valve member (24) is away from its seat, the spring (28) being at rest.

3. A coffee maker according to claim 2, **characterized in that** the limiting spring (28) is coaxial with and outside the second cylinder (16), and **in that** the means (30) for adjusting the pressure (P0) include a fork (30) driven by the compacting piston (34) and bearing against the end of the limiting spring (28) opposite from that bearing against the stepped piston (18).

4. A coffee maker according to claim 3, **characterized in that** the fork (30) is continuously entrained by the piston (34) as it moves relative to the limiting spring (28), the fork (30) being capable of occupying any intermediate position lying between two abutment positions.

5. A coffee maker according to claim 4, **characterized in that** the fork (30) can be driven manually in its displacement relative to the limiting spring (28) over at least a fraction of its stroke, the fork being entrained by the piston (34) over the remainder of its stroke.

6. A coffee maker according to any one of claims 3, 4, and 5, **characterized in that** the pressure limiter is arranged parallel to and beside the injector piston, and **in that** the fork (30) presents a Z-shaped cross-section.

7. A coffee maker according to any one of claims 3, 4, 5, and 6, **characterized in that** the fork (30) is made of a plastics material.
